# EUROPEAN PATENT SPECIFICATION

(11) **EP 3 022 419 B1**
(45) Date of publication and mention of the grant of the patent: **29.04.2020**
(21) Application number: 14850596.9
(22) Date of filing: 26.06.2014
(51) Int. Cl.: F02C 7/00, F02C 7/20, F23R 3/00

(54) **ROUNDED EDGES FOR A PANEL OF A COMBUSTOR**
ABGERUNDETE KANTEN FÜR EINE SCHNINDEL EINER BRENNKAMMER
BORDS ARRONDIS POUR UN ÉCRAN THERMIQUE DE CHAMBRE DE COMBUSTION

(30) Priority: 16.07.2013 US 201361846649 P
(43) Date of publication of application: 25.05.2016
(73) Proprietor: United Technologies Corporation, Farmington, CT 06032 (US)
(72) Inventor: SMITH, Darren M., Andover, Connecticut 06232 (US)
(74) Representative: Dehns
(86) International application number: PCT/US2014/044232
(87) International publication number: WO 2015/050603

(56) References cited:
- EP-A2- 1 510 757
- GB-A- 2 298 267
- GB-A- 2 317 005
- US-A- 4 242 871
- US-A- 4 413 477
- US-A- 4 655 044
- US-A- 4 655 044
- US-A- 5 131 222

## Description

### CROSS-REFERENCE TO RELATED APPLICATION

This application claims priority to U.S. Provisional Application No. 61/846,649, filed July 16, 2013.

### BACKGROUND OF THE INVENTION

This application relates to components which are to be attached in a hot gas path in a gas turbine engine.

Gas turbine engines are known, typically include compressor compressing air and delivering it into a combustor where it is mixed with fuel and ignited. Products of this combustion pass downstream over turbine rotors driving them to rotate. Eventually the products of combustion leave through an exhaust nozzle. In some engine types, an after burner may be provided adjacent the exhaust nozzle.

The combustor, and everything downstream of the combustor, could be in the path of hot products of combustion. Components utilized in this hot flow path are subject to challenges due to the high temperatures. Thus, liners are utilized at many of these locations. As an example, the combustor is often provided with combustor liners, as are the exhaust nozzle, and the after burner. Historically, these liners have been attached to an outside housing, and the liners have a web facing the products of combustion, and end legs bent back toward the housing at a sharp angle. The sharp angle creates a corner.

The corner provides a location for initiation of cutting or burning of the metal. In addition, while it is desirable to provide coatings on such panels, it is difficult to apply a coating to a sharp corner. Document US5799491 discloses a combustion chamber with panels according to the preamble of claim 1.

### SUMMARY OF THE INVENTION

The object of the invention is solved by the features of claim 1.

In another embodiment according to the previous embodiment, the central web extends along a direction having at least a component parallel to an axis of an engine which is to receive the section.

In another embodiment according to any of the previous embodiments, the housing is part of a combustor in a gas turbine engine.

In another embodiment according to any of the previous embodiments, the housing is part of an exhaust nozzle.

In another embodiment according to any of the previous embodiments, the housing is part of a turbine section.

In another featured embodiment, a gas turbine engine has a combustor section, a turbine section and an exhaust nozzle, with one of the combustor, the turbine section, and the exhaust nozzle being formed with a plurality of panels attached to a housing. The plurality of panels faces toward a flow path of hot products of combustion. The panels include a central web and extending legs, with a bend between the central web and the extending legs formed at a radius.

These and other features of this application may be best understood from the following specification and drawings, the following which is a brief description.

### BRIEF DESCRIPTION OF THE DRAWINGS

- Figure 1: shows a gas turbine engine.
- Figure 2: shows a prior art structure.
- Figure 3A: shows a new liner structure.
- Figure 3B: shows a feature that is made easier with the new liner structure.

### DETAILED DESCRIPTION

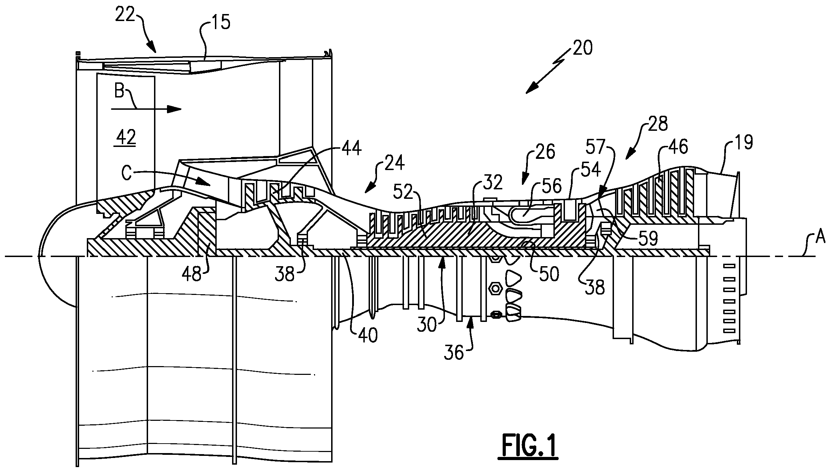

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 10,668m (35,000 feet). The flight condition of 0.8 Mach and 10,668m (35,000ft), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in m/sec (ft/sec) divided by an industry standard temperature correction of [(Tram °R) / (518.7 °R)]^{0.5}. The "Low corrected fan tip speed" as disclosed herein according to one non-limiting embodiment is less than about 350 m/second (1150 ft/second).

An exhaust nozzle 19 is shown. An afterburner may be included in the nozzle.

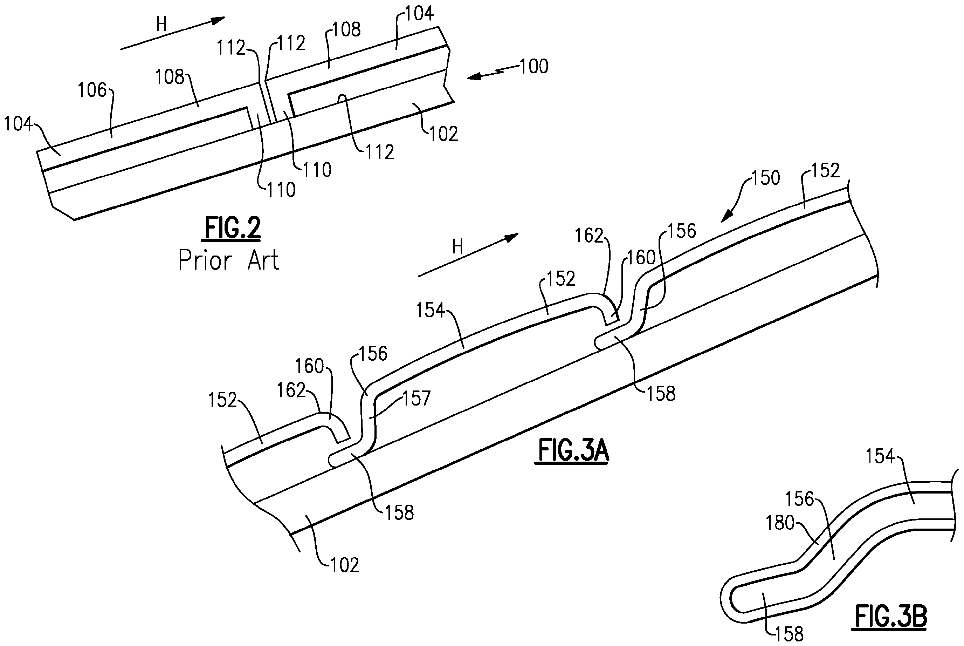

Figure 2 shows a portion of an existing combustor 100 having an outer housing 102, and radially inner liners 104 which are attached to the housing 102. The liners 104 may be attached in any known manner. As an example, bolts may be used. While the housing 102 is termed an "outer housing" with the liners 104 being "radially inner," it should be understood that the term "inner" and "outer" both relate to the interior of the combustor 100, and the flow path of the hot gas flow H.

The liners 104 can be seen to have a web or face 108 which extends generally along the axis of rotation A of the engine. It could be said that the web 108 extends along a direction having at least a component parallel to the axis of rotation A. Of course, the web can deviate from being directly parallel. The web 108 face radially inwardly, and face a hot gas flow H. Legs 110 are formed at ends of the web 108, and extend generally radially outwardly from the web 108. This creates a sharp corner 112. As mentioned above, sharp corners 112 provide a location for initiation of burning or cutting of the metal, and further complicate the application of a coating.

Figure 3A shows an inventive liner 150 such as a liner for combustor 150. The outer housing 102 is provided with panels 152. Panels 152 have a central web 154 leading to a curved or radiused bend 156 which bends from the web 154 through a leg 157, and to a radially outer foot 158. As can be appreciated, foot 158 extends in an axial direction away from the web 154. The bends formed in the liner 150 could be formed by any number of bending techniques or by casting, machining, or any other process for forming the radius shape.

Forming the bend 156 at a radius eliminates the sharp corner 112 of the prior art. The other end of the panels 162 bends into a leg 160 which extends radially outwardly and, in this embodiment, contacts the foot 158. Of course, there may not be contact in other embodiments. Here again, the bend 162 is formed on a radius.

By eliminating the sharp corner, the localized spot for initiation of cutting or burning is also eliminated.

Further, as shown in Figure 3B, a coating 180 may be applied to the panel 154, and will be better able to adhere to the bends 156 and 162.

While the panels are illustrated in a combustor section, such as combustor section 56, the panels could also be utilized in the turbine section, or in the exhaust nozzle of the Figure 1 engine.

Although an embodiment of this invention has been disclosed, a worker of ordinary skill in the art would recognize that certain modifications would come within a scope of this invention.

## Claims

1. A gas turbine engine section comprising a housing (102), and a plurality of panels (152) attached to said housing (102), for facing toward a flow path of hot products of combustion, said panels (152) including a central web (154) and extending legs (157,160), with a bend (156,162) between said central web (154) and each of said extending legs (157,160), each bend formed at a radius, wherein a bend (156) from said central web (154) at a first end extends into one of said legs (157) and leads to a foot (158) which extends axially away from said web (154), and a bend (162) into one of said legs (160) at a second end of said panel (152) having said leg (160) positioned on a foot (158) of an adjacent one of said panels (152), **characterized in that** each panel (152) is provided with a coating, said coating entirely covering said panel (152).

2. The section as set forth in claim 1, wherein said central web (154) extends along a direction having at least a component parallel to an axis (A) of an engine (20) which is to receive the section.

3. The section as set forth in any preceding claim, wherein said housing (102) is part of a combustor (26) in a gas turbine engine (20).

4. The section as set forth in any of claims 1 and 2, wherein said housing (102) is part of an exhaust nozzle (19).

5. The section as set forth in any of claims 1 and 2, wherein said housing (102) is part of a turbine section (28).

6. A gas turbine engine (20) comprising:
a combustor section (26), a turbine section (78) and an exhaust nozzle (19), with one of said combustor (26), said turbine section (28), and said exhaust nozzle (19) being a section as recited in any preceding claim; and
said plurality of panels (152) facing toward a flow path of hot products of combustion.

## Patentansprüche

1. Gasturbinentriebwerksabschnitt, umfassend ein Gehäuse (102) und eine Vielzahl von Schindeln (152), die an dem Gehäuse (102) angebracht sind, um einem Strömungsweg von heißen Verbrennungsprodukten zugewandt zu sein, wobei die Schindeln (152) einen zentralen Steg (154) und gestreckte Schenkel (157, 160) beinhalten, wobei eine Biegung (156, 162) zwischen dem zentralen Steg (154) und jedem der gestreckten Schenkel (157, 160) vorliegt, wobei jede Biegung mit einem Radius gebildet ist, wobei sich eine Biegung (156) von dem zentralen Steg (154) an einem ersten Ende in einen der Schenkel (157) erstreckt und zu einem Fuß (158) führt, der sich axial von dem Steg (154) erstreckt, und eine Biegung (162) in einen der Schenkel (160) an einem zweiten Ende der Schindel (152) den Schenkel (160) an einem Fuß (158) einer benachbarten der Schindeln (152) positioniert aufweist, **dadurch gekennzeichnet, dass** jede Schindel (152) mit einer Beschichtung versehen ist, wobei die Beschichtung die Schindel (152) vollständig bedeckt.

2. Abschnitt nach Anspruch 1, wobei sich der zentrale Steg (154) in einer Richtung erstreckt, die wenigstens eine Komponente parallel zu einer Achse (A) eines Triebwerks (20) aufweist, das den Abschnitt aufnehmen soll.

3. Abschnitt nach einem der vorangehenden Ansprüche, wobei das Gehäuse (102) Teil einer Brennkammer (26) in einem Gasturbinentriebwerk (20) ist.

4. Abschnitt nach einem der Ansprüche 1 und 2, wobei das Gehäuse (102) Teil einer Austrittsdüse (19) ist.

5. Abschnitt nach einem der Ansprüche 1 und 2, wobei das Gehäuse (102) Teil eines Turbinenabschnitts (28) ist.

6. Gasturbinentriebwerk (20), umfassend:
einen Brennkammerabschnitt (26), einen Turbinenabschnitt (78) und eine Austrittsdüse (19), wobei eins von der Brennkammer (26), dem Turbinenabschnitt (28) und der Austrittsdüse (19) ein Abschnitt nach einem der vorangehenden Ansprüche ist; und
die Vielzahl von Schindeln (152), die einem Strömungsweg von heißen Verbrennungsprodukten zugewandt ist.

## Revendications

1. Section de moteur à turbine à gaz comprenant un boîtier (102) et une pluralité d'écrans thermiques (152) fixés audit boîtier (102), pour faire face à un trajet d'écoulement de produits de combustion chauds, lesdits écrans thermiques (152) comportant une bande centrale (154) et des pattes extensibles (157, 160), avec un pli (156, 162) entre ladite bande centrale (154) et chacune desdites pattes extensibles (157, 160), chaque pli étant formé selon un rayon, dans laquelle un pli (156) à partir de ladite bande centrale (154) à une première extrémité s'étend dans l'une desdites pattes (157) et se dirige vers un pied (158) qui s'étend axialement à l'écart de ladite bande centrale (154), et un pli (162) dans l'une desdites pattes (160) à une seconde extrémité dudit écran thermique (152) ayant ladite patte (160) positionnée sur un pied (158) de l'un adjacent desdits écrans thermiques (152), **caractérisée en ce que** chaque écran thermique (152) est pourvu d'un revêtement, ledit revêtement recouvrant entièrement ledit écran thermique (152).

2. Section selon la revendication 1, dans laquelle ladite bande centrale (154) s'étend le long d'une direction ayant au moins un composant parallèle à un axe (A) d'un moteur (20) qui est destiné à recevoir la section.

3. Section selon une quelconque revendication précédente, dans laquelle ledit boîtier (102) fait partie d'une chambre de combustion (26) dans un moteur à turbine à gaz (20).

4. Section selon l'une quelconque des revendications 1 et 2, dans laquelle ledit boîtier (102) fait partie d'une buse d'échappement (19).

5. Section selon l'une quelconque des revendications 1 et 2, dans laquelle ledit boîtier (102) fait partie d'une section de turbine (28).

6. Moteur à turbine à gaz (20) comprenant :
une section de chambre de combustion (26), une section de turbine (78) et une buse d'échappement (19), l'une de ladite chambre de combustion (26), de ladite section de turbine (28) et de ladite buse d'échappement (19) étant une section selon une quelconque revendication précédente ; et
ladite pluralité d'écrans thermiques (152) faisant face à un trajet d'écoulement de produits de combustion chauds.
